# EUROPEAN PATENT APPLICATION

(11) **EP 1 473 344 A1**
(43) Date of publication of application: **03.11.2004**
(21) Application number: 04252445.4
(22) Date of filing: 28.04.2004
(51) Int. Cl.: C09D 183/04, C08J 7/04, C03C 17/30

(54) **Formation of functional coating and functional coated article**

(30) Priority: 28.04.2003 JP 2003123195
(71) Applicant: SHIN-ETSU CHEMICAL CO., LTD., Chiyoda-ku, Tokyo (JP); Nippon Sheet Glass Co., Ltd., Osaka-shi, Osaka 541-8559 (JP)
(72) Inventor: Asai, Mitsuo, Silicone-Electronics Materials, 1-10 Oaza Hitomi, Usui-gun, Gunma-ken (JP); Uehara, Hitoshi, Silicone-Electronics Materials, 1-10 Oaza Hitomi, Usui-gun, Gunma-ken (JP); Tanaka, Masaki,, Chiyoda-ku, Tokyo (JP); Kamitani, Kazutaka, Chuo-ku, Osaka-shi, Osaka 541-8559 (JP)
(74) Representative: Stoner, Gerard Patrick

(57) **Abstract**

A hydrosilyl radical-bearing organosilicon compound is applied to a substrate which has been coated with an aliphatic unsaturated hydrocarbon radical-bearing material, whereupon reaction takes place between the coating of aliphatic unsaturated hydrocarbon radical-bearing material and the hydrosilyl radical-bearing organosilicon compound. A fully durable functional coating is formed on the substrate surface. The method can modify surfaces of plastics, metals, ceramics, pottery and glass substrates for imparting functions such as water repellent, hydrophilic, anti-staining or electroconductive properties thereto.

## Description

This invention relates to a method for forming a coating for modifying surfaces of substrates e.g. of plastics, metals, ceramics, pottery, glass or the like for imparting functional properties such as water repellent, hydrophilic, anti-staining and electroconductive properties thereto, and corresponding coated articles.

### BACKGROUND

It is known that coatings of organic polysiloxanes on substrates impart various properties to the substrate surface. For example, coatings of dimethylpolysiloxane present surfaces having satisfactory surface lubricating, water repellent and anti-staining properties. Copolymers of polyoxyalkylene with dimethylpolysiloxane impart anti-fogging property to the surface. Dimethylpolysiloxane modified with fluoroalkyl radicals imparts oil repellent property in addition to surface lubricating, water repellent and anti-staining properties.

However, these organic polysiloxanes merely wet the substrate surface simply after they are applied to the substrate surface. They are readily removed from the surface by abrasion or under the influence of solvents. A method of fixing them as a functional coating which is thin and durable has not been established.

JP-B 6-49597 discloses water repellent glass comprising a glass substrate, an intermediate layer of silicon dioxide lying on the substrate surface and having a thickness of at least 1,000 A, and a water-repellent layer lying on the intermediate layer. However, the bond between the intermediate layer of silicon dioxide and the water-repellent layer is so weak that the water-repellent layer may be gradually peeled off by repeated wiping.

Japanese Patent No. 3,007,436 discloses that a substrate is immersed in a solution of a silicone compound having a chlorosilane radical at one end or both ends in a non-aqueous organic solvent, thereby producing a siloxane-base monomolecular film having siloxane bonds formed between the silicone and the substrate. However, chlorosilane radicals are highly reactive with water and prone to hydrolysis with water which is contained in traces in the non-aqueous solvent or the atmosphere where coating operation is carried out. As a result, polycondensation of silicone compound molecules inevitably occurs, which is inconvenient in effectively forming strong bonds between the substrate and the silicone compound.

JP-A 9-157635 describes that a mixture of an anionic surfactant and a copolymer of polyoxyalkylene with dimethylpolysiloxane imparts a highly durable, anti-fogging surface. On actual use in a bath room, a coating of this mixture remained durable a few days at most.

JP-A 2002-97192 describes that an organopolysiloxane having a polyfluoroalkyl radical at one end and a hydrolyzable silyl radical at the other end is effective for removing water droplets on glass. However, these organic polysiloxanes suffer from a problem of durability because of insufficient orientation of terminal hydrolyzable silyl radicals to the substrate surface.

JP-A 5-169011 describes a treated structure having an anti-staining surface. A substrate is surface treated with a pre-treating composition primarily comprising an organic polymer having first reactive functional radicals. Then an anti-staining composition primarily comprising a water repellent, anti-staining agent having second reactive functional radicals capable of reacting with the first reactive functional radicals is applied thereon to induce reaction with the pre-treating layer. In one example described therein, a substrate is pre-treated with an allyl radical-bearing acrylic resin, and a hydrogenpolysiloxane having SiH radicals only on side chains of the siloxane (KF-99 by Shin-Etsu Chemical Co., Ltd.) is applied thereon whereby reaction takes place by way of hydrosilylation. However, this method makes use of a hydrogenpolysiloxane having SiH radicals only on side chains, resulting in shortage of reactivity on account of steric hindrance. Also, the pre-treatment makes use of an acrylic resin which is less wettable to the siloxane compound so that fixation due to the reaction between them is insufficient.

An aim herein is to provide new and useful methods of affixing an organic polysiloxane capable of imparting desired surface properties to a substrate surface as a functional coating which is thin and durable. Another object is to provide a functional coated article obtained thereby.

The inventors have found that when a hydrosilyl radical-bearing organosilicon compound is applied to a substrate which has been surface coated with a material having aliphatic unsaturated hydrocarbon radicals, whereby hydrosilylation reaction takes place between the coating of aliphatic unsaturated hydrocarbon radical-bearing material and the hydrosilyl radical-bearing organosilicon compound, a functional coating which is thin and durable is formed on the surface of the substrate.

In a first aspect, the invention provides a method for forming a coating, comprising the steps of furnishing a substrate which is surface coated with a material having aliphatic unsaturated hydrocarbon radicals, applying to the coating on the substrate at least one organosilicon compound having the general formula (1) below, and effecting hydrosilylation reaction between the coating of the material having aliphatic unsaturated hydrocarbon radicals and the organosilicon compound, thereby forming a functional coating on the outermost surface of the substrate. 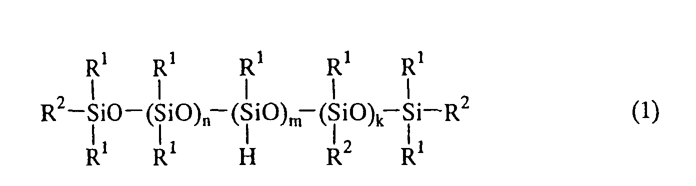 Herein R¹ is independently at each occurrence a monovalent hydrocarbon radical of 1 to 12 carbon atoms, R² is independently at each occurrence hydrogen or a monovalent organic radical having a functional property, at least one of R² at opposite ends is hydrogen, k is an integer of 0 to 100, m is an integer of 0 to 100, and n is an integer of 0 to 100.

The invention also provides a functional coated article comprising a functional coating formed on a substrate surface by the above method.

### FURTHER EXPLANATIONS; OPTIONS AND PREFERENCES

The method for forming a functional coating according to the invention starts with a substrate which is surface coated with a material having aliphatic unsaturated hydrocarbon radicals. One or more hydrosilyl radical-bearing organosilicon compound having the general formula (1) is applied to the coating on the substrate. Then hydrosilylation reaction takes place between the coating of aliphatic unsaturated hydrocarbon radical-bearing material and the hydrosilyl radical-bearing organosilicon compound. As a result, a functional coating is formed on the outermost surface of the substrate.

The material having aliphatic unsaturated hydrocarbon radicals is a compound having aliphatic unsaturated hydrocarbon radicals such as vinyl, allyl, hexenyl and styryl radicals. As used herein, the term "material" embraces a monomer and a polymer resulting from polymerization of the monomer. The unsaturated hydrocarbon radicals are preferably monovalent aliphatic unsaturated hydrocarbon radicals of 2 to 20 carbon atoms, preferably 2 to 12 carbon atoms, even more preferably 2 to 8 carbon atoms, having a carbon-to-carbon double bond at least at an end.

The material is preferably at least one member selected from the group consisting of a silane containing at least one radical having an aliphatic unsaturated bond and at least one hydrolyzable radical directly bonded to a silicon atom in a molecule, a partial hydrolyzate thereof, and a hydrolytic condensate thereof.

Specifically, the silanes used herein include those having the formula:

R³ _{(4-a-b)}R⁴ _{b}SiXₐ

wherein R³ is a monovalent radical free of aliphatic unsaturation, R⁴ is a monovalent radical having an aliphatic unsaturated bond, X is a hydrolyzable radical, "a" is an integer of 1 to 3, "b" is an integer of 1 to 3, and a+b is an integer of 2 to 4.

The monovalent radicals free of aliphatic unsaturation represented by R³ are preferably monovalent hydrocarbon radicals of 1 to 10 carbon atoms, especially 1 to 8 carbon atoms, for example, alkyl radicals such as methyl, ethyl, propyl, butyl, hexyl and decyl, cycloalkyl radicals such as cyclohexyl, aryl radicals such as phenyl and tolyl, and aralkyl radicals such as benzyl. R⁴ is selected from monovalent radicals of 2 to 20 carbon atoms, more preferably 2 to 12 carbon atoms, especially 2 to 8 carbon atoms, having an aliphatic unsaturated bond, for example, alkenyl radicals such as vinyl, allyl, butenyl, pentenyl, hexenyl and heptenyl, styryl, (meth)acrylic and (meth)acryloyl radicals. Examples of the hydrolyzable radical represented by X include alkoxy radicals of 1 to 4 carbon atoms, especially 1 to 2 carbon atoms, such as methoxy and ethoxy, halogen atoms such as chlorine, and acyloxy radicals such as acetoxy. Inter alia, alkoxy radicals are preferred. The subscript "a" is an integer of 1 to 3, preferably 2 or 3, "b" is an integer of 1 to 3, preferably 1, and a+b is an integer of 2 to 4, preferably 3 or 4.

The material having aliphatic unsaturated hydrocarbon radicals may also be a mixture of the aforementioned hydrolyzable silane having an aliphatic unsaturated bond and a hydrolyzable silane free of an aliphatic unsaturated hydrocarbon radical, or a co-hydrolyzate of these silanes. In a further embodiment, the material having aliphatic unsaturated hydrocarbon radicals comprises (i) at least one member selected from the group consisting of a silane containing at least one radical having an aliphatic unsaturated bond and at least one hydrolyzable radical directly bonded to a silicon atom in a molecule, a partial hydrolyzate thereof, and a hydrolytic condensate thereof, and (ii) at least one member selected from the group consisting of a silane in which all radicals bonded to silicon atoms have hydrolyzable radicals, specifically a silane of SiX₄ wherein X is as defined above, a partial hydrolyzate thereof, and a hydrolytic condensate thereof, or a co-hydrolyzate of these silanes.

In a still further embodiment, the material having aliphatic unsaturated hydrocarbon radicals may comprise organic resins containing such radicals e.g. acrylic or epoxy resins filled with inorganic powder (e.g. silica, titania, zirconia or the like) which has been surface treated with an aliphatic unsaturated radical-bearing silane, or organic polymers such as unreacted, aliphatic unsaturated radical-bearing acrylic resins.

On use, the material having aliphatic unsaturated hydrocarbon radicals is preferably diluted with an organic solvent in which the material is soluble. Examples of the organic solvent in which the material is soluble include alcoholic solvents such as methanol, ethanol and isopropanol, non-polar solvents such as toluene, xylene, hexane and industrial gasoline, ketone solvents such as acetone and methyl ethyl ketone, and ester solvents such as ethyl acetate and butyl acetate.

The substrate which is coated with the material having aliphatic unsaturated hydrocarbon radicals is not particularly limited. It may be selected from among glass, plastics, metals, ceramics and pottery. Preferred is glass, especially automobile window glass.

In forming a coating of the material having aliphatic unsaturated hydrocarbon radicals on a surface of the substrate, any well-known coating techniques including brush coating, spraying, roll coating, dipping, and spin coating may be used.

The coverage of the material having aliphatic unsaturated hydrocarbon radicals is not particularly limited as long as the material covers the substrate surface. The preferred coverage is such an amount as to provide a coating thickness of 0.001 to 1,000 µm, especially 0.1 to 100 µm, although it varies with the substrate and the intended application.

When the material is a silane, a partial hydrolyzate or a hydrolytic condensate thereof as described above, it is preferably cured. The cure method is selected depending on the type of material. For example, room temperature cure is employed for a room temperature curable material, and heat cure is employed for a heat curable material.

In these embodiments, a curing catalyst may be added to the material. The curing catalyst which varies with a particular cure type may be selected from well-known catalysts, for example, acids such as hydrochloric acid and acetic acid, and metal base catalysts such as titanium, tin and aluminum base catalysts. The curing catalyst is added in a catalytic amount, desirably an amount of 0.01 to 5 parts by weight per 100 parts by weight of the material having aliphatic unsaturated hydrocarbon radicals.

Prior to coating with the material, a primer may be applied to the substrate to enhance the adhesion between the substrate and the material.

According to the invention, at least one hydrosilyl radical-bearing organosilicon compound of formula (1) is applied to the substrate which has been surface coated with the material having aliphatic unsaturated hydrocarbon radicals, and hydrosilylation reaction is effected between the coating of aliphatic unsaturated hydrocarbon radical-bearing material and the hydrosilyl radical-bearing organosilicon compound of formula (1) to form a functional coating based on the organosilicon compound on the outermost surface of the substrate, thereby imparting any desired function. As used herein, the term "functional coating" refers to a coating having such a function as water repellency, oil repellency, hydrophilic property, anti-staining property or electric conductivity. 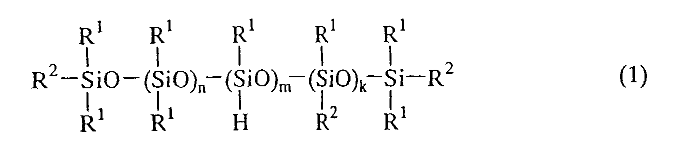 Herein R¹ is independently at each occurrence a monovalent hydrocarbon radical of 1 to 12 carbon atoms, R² is independently at each occurrence hydrogen or a monovalent organic radical which may have a functional property, at least one terminal R² is hydrogen, k is an integer of 0 to 100, m is an integer of 0 to 100, and n is an integer of 0 to 100.

R¹ is a monovalent hydrocarbon radical of 1 to 12 carbon atoms, especially 1 to 8 carbon atoms, preferably free of aliphatic unsaturation. Examples include alkyl radicals such as methyl, ethyl, propyl, butyl, hexyl and octyl, aryl radicals such as phenyl and tolyl, aralkyl radicals such as benzyl and phenylethyl, and substituted forms of the foregoing in which one or more or all hydrogen atoms are substituted with halogen atom, namely halogenated hydrocarbon radicals such as 3,3,3-trifluoropropyl. Of these, methyl is preferred for a water-repellent coating.

The monovalent organic radicals R² having or conferring a functional property are selected in accordance with desired coating properties. They may differ from the groups R¹' especially where the latter are the same as or similar to one another. More specifically, groups R² may be alkyl radicals of 1 to 15 carbon atoms, especially 1 to 8 carbon atoms, organic radicals having fluoroalkyl radicals of 1 to 15 carbon atoms, and organic radicals having oxyalkylene radicals. The organic radicals having fluoroalkyl radicals are able to impart water repellency and oil repellency whereas the organic radicals having oxyalkylene radicals are able to impart hydrophilic and anti-staining properties.

The subscript k is an integer of 0 to 100, preferably 0 to 10, m is an integer of 0 to 100, preferably 0 to 10, and n is an integer of 0 to 100, preferably 0 to 60. The organosilicon compound should contain at least one, especially 1 to 10 hydrosilyl radicals (Si-H radicals) in a molecule.

The organic radicals having fluoroalkyl radicals of 1 to 15 carbon atoms include those of the formula:

-(CH₂)ₚ-(CF₂)_{q}-CF₃

wherein p is an integer of 0 to 14 and q is an integer of 0 to 14.

The organic radicals having oxyalkylene radicals include those of the formula:

-(CH₂)ᵣ-O-(C₂H₄O)ₜ(C₃H₆O)ᵤR

wherein R is hydrogen, a monovalent C₁-C₁₀ hydrocarbon radical or C₁-C₁₀ acyl radical, r is an integer of 0 to 10, t is an integer of 0 to 50, u is an integer of 0 to 50, and t+u is an integer of 1 to 100.

Illustrative examples of the organosilicon compound are given below.

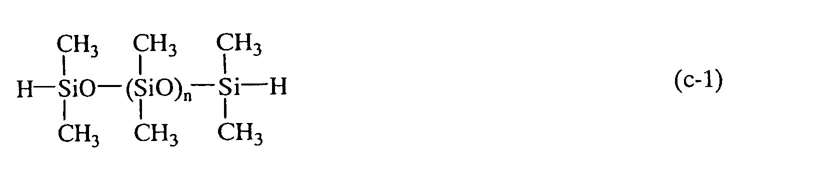

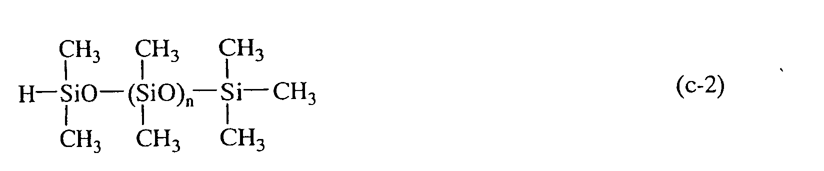

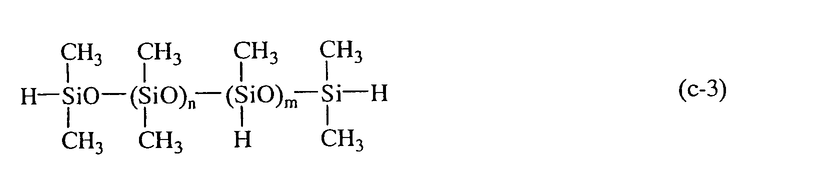

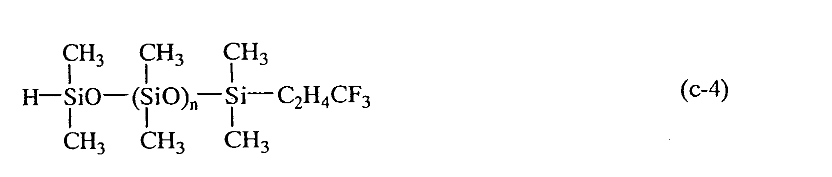

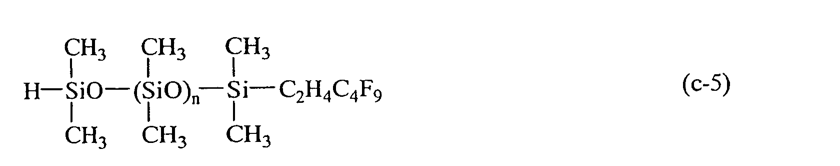

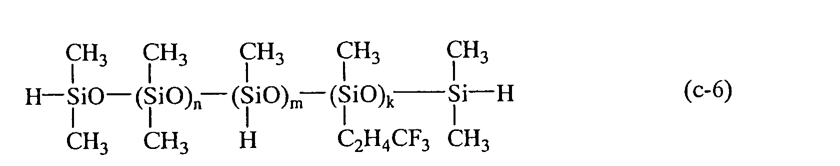

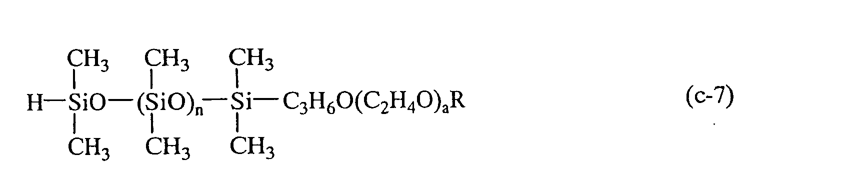

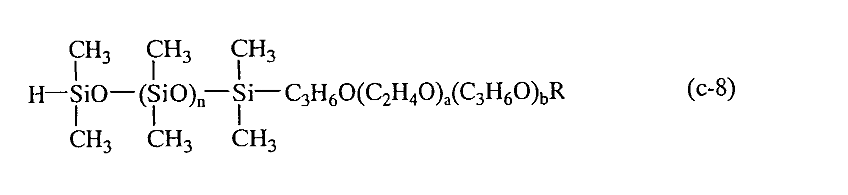

In the formulae, R is hydrogen, a monovalent C₁-C₁₀ hydrocarbon radical or C₁-C₁₀ acyl radical, "a" is an integer of 0 to 50, preferably 1 to 30, "b" is an integer of 0 to 50, preferably 0 to 20, and a+b > 1, n and m are as defined above. Also k may be as defined above.

Examples of the monovalent hydrocarbon radical represented by R are the same as exemplified for R¹, and examples of the acyl radical include formyl, acetyl, propionyl, butyryl, valeryl, caproyl, heptanoyl and octanoyl.

In the step of applying the organosilicon compound of formula (1) to the surface of the substrate which has been coated with the material having aliphatic unsaturated hydrocarbon radicals, preferably the organosilicon compound is dissolved in a solvent together with a platinum group metal catalyst to form a solution, after which the solution is applied to the substrate surface.

The platinum group metal catalysts used herein are those catalysts known to catalyze hydrosilylation reaction including platinum base catalysts such as platinum black, platinum (IV) chloride, chloroplatinic acid, reaction products of chloroplatinic acid with monohydric alcohols, complexes of chloroplatinic acid with olefins, and platinum bisacetoacetate, palladium base catalysts, and rhodium base catalysts. The platinum group metal catalyst is added in a catalytic amount, preferably in such an amount as to give 0.1 to 2,000 ppm, especially 1 to 500 ppm of platinum group metal based on the weight of the organosilicon compound of formula (1).

Examples of the solvent in which the organosilicon compound and the catalyst are dissolved include alcohols such as ethanol and isopropanol.

The coating thickness generally ranges from a monomolecular film to 100 µm, and preferably from a monomolecular film to 10 µm, with a monomolecular film being especially preferred.

The method of applying the organosilicon compound is not particularly limited. Any well-known coating methods may be used. After application, the coating is desirably held at room temperature to 250°C, more desirably 50 to 150°C for driving the hydrosilylation reaction to completion.

The method for forming a functional coating according to the invention is capable of modifying surfaces of substrates of glass, especially automobile window glass, plastics, metals, ceramics, pottery or the like for imparting functional properties such as water repellent, hydrophilic, anti-staining or electroconductive properties thereto. Advantageously, the functional coating is thin and durable.

### EXAMPLE

Examples and Comparative Examples are given below together with Synthesis Examples and Preparation Examples for illustrating the invention. Examples are not to be construed as limiting the invention thereto.

### [Synthesis of material having aliphatic unsaturated hydrocarbon radicals]

### Synthesis Example 1

A 3-liter four-necked flask equipped with a stirrer, thermometer, and water cooled condenser was charged in order with 178 g of methyltriethoxysilane, 148 g of vinyltrimethoxysilane, 250 g of isobutyl alcohol, 250 g of diacetone alcohol, 10 g of aluminum acetylacetonate, 1 g of ammonium perchlorate, and 1200 g of a 20% aqueous solution of silica sol (trade name Snowtex O by Nissan Chemical Industries, Ltd.). Reaction was effected at 40°C for 3 hours. The resulting vinyl radical-bearing compound solution is designated treating agent a-1.

### Synthesis Example 2

A 3-liter four-necked flask equipped with a stirrer, thermometer, and water cooled condenser was charged in order with 356 g of methyltriethoxysilane, 148 g of vinyltrimethoxysilane, 250 g of isobutyl alcohol, 250 g of diacetone alcohol, 10 g of aluminum acetylacetonate, 1 g of ammonium perchlorate, and 1200 g of a 20% aqueous solution of silica sol (Snowtex O by Nissan Chemical Industries, Ltd.). Reaction was effected at 40°C for 3 hours. The resulting vinyl radical-bearing compound solution is designated treating agent a-2.

### Synthesis Example 3

A 3-liter four-necked flask equipped with a stirrer, thermometer, and water cooled condenser was charged in order with 98 g of ethyl alcohol, 0.3 g of tetraethoxysilane and 0.04 g of vinyltrimethoxysilane. With 2 g of conc. hydrochloric acid added, reaction was effected at 25°C for 1 hour. The resulting vinyl radical-bearing compound solution is designated treating agent a-3.

### Comparative Synthesis Example 1

A 3-liter four-necked flask equipped with a stirrer, thermometer, and water cooled condenser was charged in order with 356 g of methyltriethoxysilane, 250 g of isobutyl alcohol, 250 g of diacetone alcohol, 10 g of aluminum acetylacetonate, 1 g of ammonium perchlorate, and 1200 g of a 20% aqueous solution of silica sol (Snowtex O by Nissan Chemical Industries, Ltd.). Reaction was effected at 40°C for 3 hours. The resulting vinyl radical-free compound solution is designated treating agent a-4.

### [Preparation of hydrosilyl radical-bearing siloxane solution]

### Preparation Example 1

A treating agent b-1 was prepared by mixing 2 g of a hydrosilyl radical-bearing dimethylpolysiloxane of formula (2) below, 0.1 g of a platinum catalyst (trade name CAT-PL-50T by Shin-Etsu Chemical Co., Ltd.) and 98 g of decamethylcyclopentasiloxane.

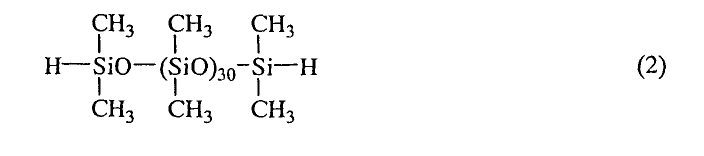

### Preparation Example 2

A treating agent b-2 was prepared by mixing 2 g of a hydrosilyl radical-bearing dimethylpolysiloxane of formula (3) below, 0.1 g of a platinum catalyst (CAT-PL-50T by Shin-Etsu Chemical Co., Ltd.) and 98 g of decamethylcyclopentasiloxane.

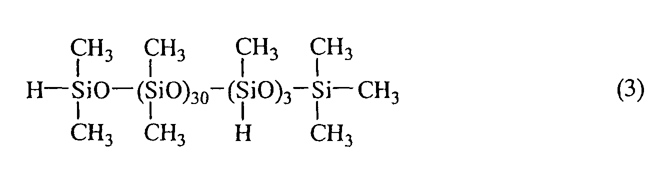

### Preparation Example 3

A treating agent b-3 was prepared by mixing 2 g of a dimethylpolysiloxane containing a trifluoropropyl radical and a hydrosilyl radical represented by formula (4) below, 0.1 g of a platinum catalyst (CAT-PL-50T by Shin-Etsu Chemical Co., Ltd.) and 98 g of toluene.

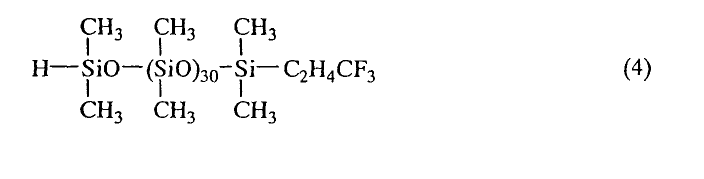

### Preparation Example 4

A treating agent b-4 was prepared by mixing 2 g of a dimethylpolysiloxane containing a polyoxyethylene radical and a hydrosilyl radical represented by formula (5) below, 0.1 g of a platinum catalyst (CAT-PL-50T by Shin-Etsu Chemical Co., Ltd.) and 98 g of methyl ethyl ketone.

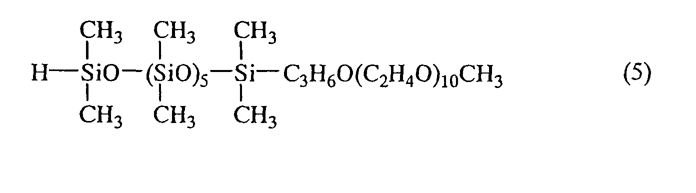

### Comparative Preparation Example 1

A (comparative) treating agent b-5 was prepared by mixing 2 g of a trialkoxysilyl radical-bearing dimethylpolysiloxane represented by formula (6) below, 1 g of 0.1N hydrochloric acid and 98 g of isopropyl alcohol.

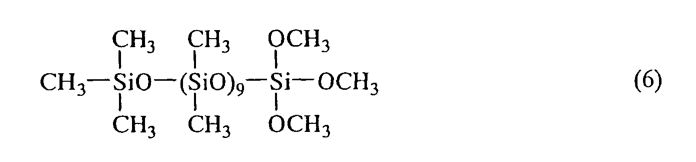

### Comparative Preparation Example 2

A (comparative) treating agent b-6 was prepared by mixing 2 g of a dimethylhydrogenpolysiloxane represented by formula (7) below, 0.1 g of a platinum catalyst (CAT-PL-50T by Shin-Etsu Chemical Co., Ltd.) and 98 g of decamethylcyclopolysiloxane.

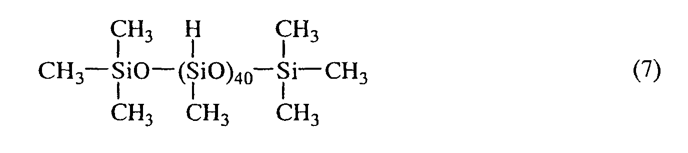

### Examples 1-9 & Comparative Examples 1-3

To each of substrates 1 to 3 shown below, any of treating agents a-1 to a-4 obtained in Synthesis Examples was applied by the coating procedure shown below, and any of treating agents b-1 to b-6 obtained in Preparation Examples was then applied by the coating procedure shown below. For these coated samples, a contact angle was measured by the test described below. The results are shown in Table 1.

### Substrate 1

Onto a transparent polycarbonate sheet (trade name Iupilon NF-2000U by Mitsubishi Engineering-Plastics Corp.), an acrylic primer (trade name Primer PC-7A by Shin-Etsu Chemical Co., Ltd.) was flow coated and heat cured at 120°C for one hour. The coated PC sheet is designated substrate 1.

### Substrate 2

A stainless steel strip (SUS316) having a gage of 1 mm, a width of 100 mm and a length of 200 mm was degreased and cleaned with acetone. This is substrate 2.

### Substrate 3

A soda-lime silicate glass plate having a gage of 3.4 mm, a width of 150 mm and a length of 150 mm was degreased and cleaned with acetone. This is substrate 3.

### [Treating procedure]

### Treatment with treating agents a-1 to a-4

Each of treating agents a-1 to a-4 was flow coated onto the substrate and heated at 130°C for one hour for curing.

### Treatment with treating aqents b-1 to b-6

Each of treating agents b-1 to b-6 was flow coated onto the substrate having treating agent "a" coated and cured thereto, then heated at 100°C for one hour, wiped with ethanol-impregnated tissue paper, and dried at room temperature for one hour.

### [Test]

### Initial contact angle

A contact angle with water was measured using a contact angle meter CA-X150 by Kyowa Interface Science Co., Ltd. (droplet method).

A contact angle with hexadecane was measured using a contact angle meter CA-X150.

### Durable contact angle

The coating surface was rubbed over 100 cycles with cotton wadding impregnated with xylene, after which a contact angle was measured in the same manner as the initial.

**Table 1**

| | Substrate | Treating agent "a" | Treating agent "b" | Initial contact angle (deg) | | Durable contact angle (deg) | | Function |
|---|---|---|---|---|---|---|---|---|
| | | | | Water | Hexadecane | Water | Hexadecane | |
| Example 1 | Substrate 1 | a-1 | b-1 | 112 | 61 | 113 | 62 | water repellent |
| Example 2 | Substrate 1 | a-2 | b-1 | 116 | 63 | 115 | 62 | water repellent |
| Example 3 | Substrate 1 | a-1 | b-2 | 110 | 62 | 103 | 61 | water repellent |
| Example 4 | Substrate 1 | a-1 | b-3 | 115 | 72 | 114 | 73 | water/oil repellent |
| Example 5 | Substrate 2 | a-1 | b-3 | 104 | 71 | 104 | 71 | water/oil repellent |
| Example 6 | Substrate 1 | a-1 | b-4 | 11 | - | 14 | - | hydrophilic |
| Example 7 | Substrate 3 | a-3 | b-1 | 103 | 60 | 101 | 60 | water repellent |
| Example 8 | Substrate 3 | a-3 | b-3 | 104 | 72 | 102 | 71 | water/oil repellent |
| Example 9 | Substrate 3 | a-3 | b-4 | 10 | - | 14 | - | hydrophilic |
| Comparative Example 1 | Substrate 1 | a-4 | b-5 | 115 | 62 | 84 | 59 | water repellent |
| Comparative Example 2 | Substrate 2 | - | b-5 | 102 | 64 | 65 | 58 | water repellent |
| Comparative Example 3 | Substrate 3 | a-3 | b-6 | 104 | 60 | 65 | 56 | water repellent |

| | | | | | | | | |
|---|---|---|---|---|---|---|---|---|
| Treating agent "a": Aliphatic unsaturated hydrocarbon radical-bearing material | | | | | | | | |
| Treating agent "b": Hydrosilyl radical-bearing siloxane solution | | | | | | | | |

It is demonstrated that by applying a hydrosilyl radical-bearing organosilicon compound to a substrate which has been coated with an aliphatic unsaturated hydrocarbon radical-bearing material, and effecting reaction between the coating of aliphatic unsaturated hydrocarbon radical-bearing material and the hydrosilyl radical-bearing organosilicon compound, a fully durable functional coating is formed on the substrate surface.

## Claims

1. A method for forming a coating, comprising the steps of :
furnishing a substrate having a surface, e.g. coating,of a material having aliphatic unsaturated hydrocarbon radicals,
applying to the substrate at least one organosilicon compound having the following general formula (1) : 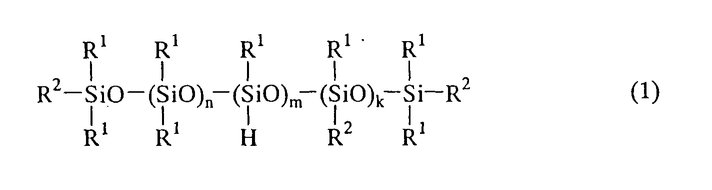
wherein groups R¹ are, independently, monovalent hydrocarbon radicals of 1 to 12 carbon atoms, groups R² are, independently, hydrogen or monovalent organic radical having a functional property, at least one of the terminal groups R² being hydrogen, k is an integer of 0 to 100, m is an integer of 0 to 100, and n is an integer of 0 to 100, and
effecting hydrosilylation reaction between the surface material having aliphatic unsaturated hydrocarbon radicals and the organosilicon compound, thereby forming a functional coating on the outermost surface of the substrate.

2. The method of claim 1, wherein said material having aliphatic unsaturated hydrocarbon radicals comprises at least one of a silane containing at least one radical having an aliphatic unsaturated bond and at least one hydrolysable radical directly bonded to a silicon atom in a molecule, a partial hydrolysate of such silane, and a hydrolytic condensate of such silane.

3. The method of claim 1 or 2, wherein said material having aliphatic unsaturated hydrocarbon radicals comprises
at least one member selected from the group consisting of a silane containing at least one radical having an aliphatic unsaturated bond and at least one hydrolyzable radical directly bonded to a silicon atom in a molecule, a partial hydrolyzate thereof, and a hydrolytic condensate thereof, and
at least one member selected from the group consisting of a silane in which all radicals bonded to silicon atoms have hydrolyzable radicals, a partial hydrolyzate thereof, and a hydrolytic condensate thereof.

4. The method of any one of claims 1 to 3, wherein in said material having aliphatic unsaturated hydrocarbon radicals, the aliphatic unsaturated hydrocarbon radical is an aliphatic unsaturated hydrocarbon radical of 2 to 20 carbon atoms having a carbon-to-carbon double bond at least at an end.

5. The method of any one of claims 1 to 4, wherein in formula (1), the monovalent organic radical having a functional property represented by R² is an alkyl radical of 1 to 15 carbon atoms.

6. The method of any one of claims 1 to 4, wherein in formula (1), the monovalent organic radical having a functional property represented by R² is an organic radical having a fluoroalkyl radical of 1 to 15 carbon atoms.

7. The method of any one of claims 1 to 4, wherein in formula (1), the monovalent organic radical having a functional property represented by R² is an organic radical having an oxyethylene radical.

8. A method according to any one of the preceding claims comprising as an initial step the formation of a said coating of said material on the surface of the substrate.

9. A method according to any one of the preceding claims wherein the substrate is glass.

10. A functional coated article comprising a substrate having functional coating formed on the substrate surface by a method of any one of claims 1 to 9.

11. A functional coated article of claim 10 which is a water-repellent automobile window glass.
